**Europäisches Patentamt**

**European Patent Office**

**Office européen des brevets**

(19)

(11) Veröffentlichungsnummer: **0 131 851**

**B1**

(12) # EUROPÄISCHE PATENTSCHRIFT

(45) Veröffentlichungstag der Patentschrift:
**16.03.88**

(51) Int. Cl.⁴: **B 25 B 23/06**, F 16 B 25/00

(21) Anmeldenummer: **84107815.7**

(22) Anmeldetag: **05.07.84**

(54) Gerät zum Ein- bzw. Ausdrehen von Schrauben.

(30) Priorität: **15.07.83 DE 3325565**

(43) Veröffentlichungstag der Anmeldung:
**23.01.85 Patentblatt 85/4**

(45) Bekanntmachung des Hinweises auf die Patenterteilung:
**16.03.88 Patentblatt 88/11**

(84) Benannte Vertragsstaaten:
**AT BE CH DE FR GB IT LI LU NL SE**

(56) Entgegenhaltungen:
**DE-A-2 113 310**
**DE-A-2 440 156**
**DE-A-3 141 248**
**US-A-2 943 652**
**US-A-3 526 257**
**US-A-4 373 842**

(73) Patentinhaber: **EJOT Eberhard Jaeger GmbH & Co. KG, Untere Bienhecke Postfach 11 47, D-5928 Bad Laasphe- 1 (DE)**

(72) Erfinder: **Aab, Hans Walter, Frohnackerstrasse 10/1, D-7050 Waiblingen (DE)**
Erfinder: **Kniese, Arnd, Vor dem Fang 28, D-5928 Bad Laasphe (DE)**

(74) Vertreter: **Patentanwälte Ruff und Beier, Neckarstrasse 50, D-7000 Stuttgart 1 (DE)**

## Beschreibung

Die Erfindung betrifft einen Motor-Schraubenzieher mit einer Schraubeinheit und einer Schrauben-Zuführeinheit, die etwa parallel zur Schraubachse in einer Vorschub- und einer Rückholbewegung gegeneinander bewegbar gelagert sind, von denen die Zuführeinheit zur Förderung der Schrauben von einem Schrauben-Magazin über eine Förderbahn zu einem Schrauben-Halter ausgebildet ist, in dem die jeweilige Schraube etwa in der Schraubachse in ihrer Schraubstellung liegt, und von denen der Schraubeinheit ein durch relative Axialbewegung in formschlüssigen Dreheingriff mit einem Eingriffsglied des Schraubenkopfes zu bringendes Schraubwerkzeug zugeordnet ist, das über eine Spindel mit einem Antriebsmotor zu kuppeln ist.

Derartige, motorisch angetriebene Schraubenzieher dienen beispielsweise dazu, oft wiederholte Schraubvorgänge zu erleichtern, indem die Schraubenzuführung selbsttätig erfolgt. Ein bevorzugtes Anwendungsgebiet ist die Befestigung von Dach- und Wandelementen aus Blech oder anderen Materialien, wobei die automatisch zugeführten Schrauben während des Eindrehens ihr Schraubloch bohren und das zugehörige Gewinde schneiden. Insbesondere bei Schlitzschrauben, Mehrkantschrauben und ähnlichen Ausbildungen besteht bei motorbetriebenen Schraubenziehern das wesentliche Problem, das Schraubwerkzeug so in Eingriff mit dem Schraubenkopf zu bringen, daß es den Kopf bzw. dessen Eingriffsprofil nicht beschädigt, zumal hierbei eine Beschädigung auch des Schraubwerkzeuges auftreten kann. Diese Nachteile nehmen mit der Schraubkraft, mit welcher die Schraube aufgrund ihrer Abmessungen und ihres Typs einzudrehen ist, zu, weshalb sie bei schweren Schrauben und bei selbstschneidenden Schrauben besonders groß ist.

Steht das Schraubwerkzeug bei der axialen Anstellung gegen den Schraubenkopf hinsichtlich seines Drehantriebes still, so kommt es nur in denjenigen wenigen Fällen in korrekten Eingriff mit dem Eingriffsglied des Schraubenkopfes, in denen es gegenüber diesem exakt ausgerichtet ist. In allen anderen Fällen schlägt das Schraubwerkzeug gegen die Stirnseite des Schraubenkopfes an, ohne zunächst vollends in Eingriff zu kommen. Erst mit Inbetriebnahme des Motorantriebes und unter der Voraussetzung eines axialen Druckes des Schraubwerkzeuges gegen den Schraubenkopf besteht die Möglichkeit, daß das Schraubwerkzeug in Eingriff mit dem Eingriffsglied kommt. Ist die axiale Druckkraft hierbei zu gering, so überspringt das Schraubwerkzeug infolge der relativ hohen Drehkraft und Drehzahl des Antriebsmotors das Eingriffsglied, wodurch dieses in den meisten Fällen bereits verformt bzw. beschädigt wird. Wird das Schraubwerkzeug dagegen bereits vor der axialen, gegen den Schraubenkopf gerichteten Anstellbewegung über den Motorantrieb in Drehung versetzt und dann erst axial angestellt, so können die genannten Nachteile noch wesentlich gravierender sein.

Durch die US-A-2 943 652 ist ein Motor-Schraubenzieher bekanntgeworden, bei welchem durch axiale Bewegung der Schraubeinheit das Schraubwerkzeug in Eingriff mit der jeweiligen Schraube gebracht und gleichzeitig eine Drehantriebs-Kupplung für das Schraubwerkzeug eingerückt werden kann. Nach diesem Einrücken wird durch Hebelbetätigung der Antriebsmotor in Gang gesetzt. Hat das Schraubwerkzeug bis zu diesem Zeitpunkt noch nicht in das Eingriffsglied der Schraube gefunden, so kann es leicht zu Beschädigungen kommen.

Der Erfindung liegt die Aufgabe zugrunde, einen Motor-Schraubenzieher der genannten Art so auszubilden, daß das Schraubwerkzeug unabhängig vom motorischen Antrieb bei seiner axialen Anstellbewegung gegen den Schraubenkopf zum Auffinden des Eingriffsgliedes eine kleine Drehbewegung ausführt und daß ein beschädigungsfreier Eingriff des Schraubwerkzeuges in den Schraubenkopf gewährleistet ist.

Diese Aufgabe wird bei einem Motor-Schraubenzieher der eingangs beschriebenen Art gemäß der Erfindung dadurch gelöst, daß das Schraubwerkzeug gegenüber der Spindel axial bewegbar angeordnet und zwischen dem Schraubwerkzeug und der Spindel ein die relative Axialbewegung in eine Einfädeldrehung des Schraubwerkzeuges gegenüber dem Eingriffsglied umsetzender Anstell-Verdrehantrieb vorgesehen ist. Dadurch ergibt sich eine sehr weiche Relativdrehung zwischen dem Schraubwerkzeug und dem Schraubenkopf während des Einfädelns des Schraubwerkzeuges in das Eingriffsglied, da hierbei der Motorantrieb für das Schraubwerkzeug nicht mitwirkt. Erst nach Erreichen des Eingriffes des Schraubwerkzeuges in den Schraubenkopf wird der Motor angeschaltet und dadurch die Schraubdrehung durchgeführt.

Nach einem weiteren Merkmal der Erfindung ist das Schraubwerkzeug gegenüber der Spindel entgegen der Kraft einer Feder axial verstellbar, die vorzugsweise in einer einen Schaft des Schraubwerkzeuges führenden Bohrung der Spindel angeordnet ist, so daß sich eine sehr kompakte Ausbildung ergibt.

Bei einer besonders einfachen Ausführungsform des Erfindungsgegenstandes weisen das Schraubwerkzeug und die Spindel als Anstell-Verdrehantrieb einen in eine schräge Anstellführung eingreifenden Vorsprung auf, wobei vorzugsweise als Vorsprung im Schaft des Schraubwerkzeuges ein Querstift angeordnet ist, der in ein unter Steigung schräg ansteigendes Langloch im hülsenförmigen vorderen Ende der Spindel eingreift, so daß keine über den Umfang der Spindel vorstehenden Teile erforderlich sind.

Eine besonders vorteilhafte Weiterbildung des Erfindungsgegenstandes besteht darin, daß das Schraubwerkzeug zum Eingriff in mehrkantförmige Schraubenköpfe ausgebildet ist und einen axial federbelasteten Zentrierstift für den Eingriff in eine Zentrierausnehmung in der Stirnfläche des Schraubenkopfes aufweist, wobei der Zentrierstift vorzugsweise ein stumpfwinklig konisches Zentrierende aufweist. Dadurch kann das Schraubwerkzeug sehr eng an den Schraubenkopf angepaßt werden, und trotzdem ist durch die zentrierende Ausrichtung selbst bei verhältnismäßig großen Lagerspielen gewährleistet, daß das Schraubwerkzeug sehr präzise in das Eingriffsglied findet.

In weiterer Ausgestaltung der Erfindung weist die Zuführeinheit einen Gehäuseteil mit einer vorderen Führung für die Spindel auf, der gegenüber der Schraubeinheit gegen die Kraft einer Rückstellfeder axial verschiebbar gelagert ist. Der Gehäuseteil ist in Axialansicht bevorzugt nach Art eines Schmalprofiles in einer Richtung wesentlich schmaler ausgebildet als in der dazu quer liegenden Richtung. Der Schraubenzieher und insbesondere sein vorderer, im Bereich der Einschraubstelle angreifender Teil ist somit so schmal herzustellen, daß der Schraubenzieher auch für Stellen geeignet ist, die nur schwer zugänglich sind, beispielsweise zum Arbeiten auf dem Boden von schmalen tiefen Wellen von Dachabdeckmaterialien.

Nach einem weiteren Vorschlag gemäß der Erfindung weist der mechanisch auslösbare Schrauben-Halter schwenkbare Haltebacken für die jeweilige Schraube auf, die mit einer insbesondere als Kulissensteuerung ausgebildeten Steuereinrichtung als Funktion der axialen Vorschub- und Rückstellbewegung der Schraubeinheit gegenüber der Zuführeinrichtung zwischen einer Haltestellung und einer Freigabestellung über ein Betätigungsglied bewegbar und vorzugsweise in der Freigabestellung verriegelbar sind. Beispielsweise können zwei die Schrauben an einem Flansch ihres Kopfes haltende Haltebacken des über die Schraubeinheit freigebbaren Schrauben-Halters vorgesehen sein, die zur Freigabe der Schraube insbesondere schwenkend wegbewegbar gelagert sind, wobei vorteilhaft die Freigabebewegung in bzw. entgegen der Zuführrichtung der Schrauben erfolgt. Die Schrauben werden vor dem Einschraubvorgang an ihrem Kopf am Schraubenzieher außerhalb des Magazins gehalten, bis das Schraubwerkzeug sie zur Führung übernommen hat, und danach werden sie zum Einschrauben freigegeben. Dadurch daß die Haltebacken des Schrauben-Halters sich nicht quer zur Schraubenzuführebene, sondern in dieser Ebene bewegen, ist auch eine besonders schmale Ausbildung des als Schmalprofil vorgesehenen Gehäuseteiles möglich.

Durch die Verriegelbarkeit der Haltebacken in der Freigabestellung ist eine Einrasteinrichtung zur Blockierung des Schrauben-Halters in der Freigabestellung geschaffen. Diese Blockierung ist für das Nachziehen einer nicht festsitzenden Schraube, das Herausdrehen einer beispielsweise falsch oder schräg angesetzten Schraube oder das Arbeiten ohne selbsttätige Schraubenzuführung von Vorteil.

Bei einer besonders zweckmäßigen Ausführungsform ist das Betätigungsglied ein schwenkbar an einem Übertragungsglied gelagerter Übertragungshebel, wobei das Übertragungsglied etwa parallel zur Schraubachse verschiebbar an der Zuführeinrichtung gelagert und insbesondere durch eine die Spindel axial verschiebbar und drehbar lagernde Lagerhülse gebildet ist. Dadurch können die wesentlichen, zur Betätigung des Schrauben-Halters vorgesehenen Teile sehr kompakt untergebracht werden. Um die Freigabebewegung des Schrauben-Halters besonders gut beeinflussen zu können, steht der Übertragungshebel in Eingriff mit Kulissen, die an der Zuführeinheit und der Schraubeinheit vorgesehen sind, wobei die Kulissensteuerung vorzugsweise mindestens zwei zusammenwirkende Kulissenschlitze an der Zuführeinrichtung und an der Schraubeinrichtung aufweist, in die ein Kulissennocken des Betätigungsgliedes eingreift. Unabhängig vom Drehantrieb des Schraubwerkzeuges wird so das Festhalten und die Freigabe der Schrauben zuverlässig und auf einfache Weise bewirkt. Das Übertragungsglied kann mit den Haltebacken über Verbindungshebel beispielsweise nach Art eines Doppel-Kniehebeltriebes antriebsverbunden sein.

Zur weiteren Erhöhung der Zuverlässigkeit des Schrauben-Halters leitet die Steuereinrichtung, vorzugsweise durch Axial - oder in Umfangsrichtung oder aber in beiden Richtungen gegeneinander versetzte Kulissenflächen, die Freigabebewegung des Schrauben-Halters beim Vorschub in einer anderen axialen Relativstellung zwischen dem Schraubwerkzeug und dem Schrauben-Halter ein als dessen Schließbewegung beim Rückhub. Dadurch wird sichergestellt, daß beim Vorschub gegen die Schraube das Schraubwerkzeug zuerst mit der Schraube in Eingriff kommt, bevor der Schrauben-Halter öffnet, während beim Rückhub die Schließbewegung des Schrauben-Halters soweit verzögert ist, daß das Schraubwerkzeug nicht versehentlich zwischen den Haltebacken festgeklemmt wird.

Die Haltebacken können in einfacher Weise Bestandteil der Zuführeinrichtung sein, wobei sie insbesondere Führungsnuten zur Aufnahme eines Flansches der Schraube aufweisen, so daß diese sehr genau und formschlüssig gesichert werden kann. Zur beschriebenen schmalen Ausbildung des Gerätekopfes sind die Haltebacken in und entgegen Schrauben-Zuführrichtung bewegbar gelagert.

Der Motor-Schraubezieher kann eine insbesondere mit einer Verriegelung versehene Einstelleinrichtung für die Schraubtiefe aufweisen, die zweckmäßig zwischen einem axial verschiebbaren Gehäuseteil des Schraubenziehers und der mit Betätigungs-Faustgriffen axial fest verbundenen Schraubeinheit vorgesehen ist. Dabei kann besonders bevorzugt die Einstelleinrichtung ein über ein Gewinde verstellbarer Anschlag sein, der ggf. zwei axial gegeneinander versetzte Anschlagflächen aufweist, die wahlweise mit einer Gegenanschlagfläche in Eingriff zu bringen sind (zum Hochschrauben). Ferner kann die Einstelleinrichtung mit einer Einrast- bzw. Verriegelungseinrichtung versehen sein. Die über ein Gewinde betätigbare Einstelleinrichtung dient zur Feineinstellung der Einschraubtiefe, die es ermöglicht, die Schraube bis zu einer bestimmten Tiefe einzuschrauben. Das ist beispielsweise von Bedeutung, wenn Schrauben mit einer untergelegten, relativ weichen Dichtungsscheibe festgezogen werden sollen oder beispielsweise einer festzuschraubenden Dachfläche eine nachgiebige Isolierung unterlegt ist, die bei einem drehmomentabhängigen Anziehen der Schrauben zu stark zusammengedrückt werden würde. Außerdem kann eine drehmomentabhängige Abschaltung des Antriebsmotors wegen der Masseträgheit sehr stark von der Drehzahl des Antriebsmotors und anderen Faktoren abhängen und daher allein zur Begrenzung der Einschraubtiefe nicht ausreichen. Der erfindungsgemäße Schraubenzieher bzw. dessen Schraubeinheit kann vorteilhaft mit einem lösbaren Anschluß in Form einer Anschlußkupplung mit einer nach Art einer Handbohrmaschine ausgebildeten Antriebseinheit verbindbar sein. Es kann daher eine handelsübliche, entsprechend ausgelegte und untersetzte Antriebsmaschine verwendet werden, so daß der Schraubenzieher mit der selbsttätigen Schraubenzuführung nach Art eines Vorsatzgerätes ausgebildet sein kann. Dadurch kann ein Baukastensystem geschaffen werden, das die Verwendung der Antriebsmaschine auch ohne das Vorsatzgerät ermöglicht, um beispielsweise Schrauben anderer Art ein und auszudrehen.

An der Antriebseinheit kann ein Stockgriff angebracht werden, unter dessen in erheblichem Abstand von der Antriebseinheit angeordneten Handgriffen insbesondere ein abkuppelbarer, mit einem elektrischen Schalter versehener Faustgriff vorgesehen ist, der wahlweise an der Antriebseinheit und an der durch die Zuführeinheit und die Schraubeinheit gebildeten Geräteeinheit ankuppelbar ist und vorzugsweise mit einem Schalter der Antriebseinheit in "Oder"-Schaltung geschaltet ist. Durch den Stockhandgriff kann der Motor-Schraubenzieher beim Arbeiten am Boden, beispielsweise zur Befestigung von Dachplatten, von der Bedienungsperson in aufrechter Haltung bedient werden. Der Hand- bzw. Faustgriff mit dem Schalter und einer entsprechenden Zuleitung zum eigentlichen Gerät ist in diesem Fall direkt am Stockgriff angebracht. Wenn dagegen der Stockgriff, der meist an der Antriebseinheit zu befestigen ist, abgenommen wird, um an aufrechten Wänden oder über Kopf zu arbeiten, wird der Handgriff aus einer z.B. schwalbenschwanzartigen Führung abgezogen und dann an einer entsprechenden Führung an der Antriebseinheit bzw. am Gerät selbst angesetzt, wobei er dann über den Schalter zum Inbetriebsetzen der Antriebseinheit verwendet werden kann. In diesem Fall dient der Handgriff als Stützgriff mit Schalter; die Bedienungsperson hat damit die Möglichkeit der einhändigen Bedienung, was beispielsweise bei Arbeiten auf Gerüsten vorteilhaft ist.

Ist der Motor-Schraubenzieher mit einer Magazinaufnahme für das Schrauben-Magazin versehen, so ist in der Magazinaufnahme zweckmäßig eine federbelastete Schraubentransporteinrichtung angeordnet, die vorzugsweise aus einem eine Rollbandfeder aufnehmenden, längs der Magazinaufnahme verschiebbaren Schlitten besteht, der an seiner Vorderseite einen biegsamen, an den Schrauben angreifenden Schieber aufweist. Dadurch wird für die Anordnung der Feder ein nur sehr geringer Raum beansprucht, und es wird möglich, den Schlitten zum erneuten Spannen der Transportfeder in einfacher Weise zu ergreifen und zurückzuziehen.

Im Bereich des Schrauben-Halters kann eine Rückhalteeinrichtung vorgesehen sein, die zumindest während des Einschraubvorganges in die Bahn der Schraubenzuführung bewegbar ist und die als nächste einzuschraubenden Schrauben zurückhält. Bei einer einfachen Ausführungsform ist im Bereich des Schrauben-Halters eine Sperre für die nachfolgenden Schrauben vorgesehen, die vorzugsweise einen an dem Schrauben-Halter angelenkten Hebel aufweist, der mit einer Anschlagfläche für den Schraubenkopf und mit einer Betätigungsfläche versehen ist, die zum Zurückziehen der Anschlagfläche aus der Bahn der Schrauben vom Schraubwerkzeug betätigbar ist. Diese Rückhalteeinrichtung bzw. Sperre sorgt dafür, daß während des Einschraubvorganges die durch die Federkraft in der Schraubenzuführung belastete nächste Schraube noch zurückgehalten wird, bis das Schraubwerkzeug sich gegenüber der Schraubenzuführung wieder in seiner Ausgangsstellung befindet. Die Rückhalteeinrichtung sorgt ferner dafür, daß die im Schraubwerkzeug aufgenommene Schraube nicht durch den seitlichen Druck der nächsten Schraube verkantet wird.

Um eine besonders unproblematische selbsttätige Schraubenzuführung zu erzielen, ist einer Magazinaufnahme eine Aufnahme- und Zuführeinrichtung für wenigstens ein weiteres Magazin zugeordnet. Die Magazinaufnahme der selbsttätigen Schraubenzuführung kann das Schraubenmagazin leicht auswechselbar aufnehmen.

Das Schraubenmagazin, das vorzugsweise im wesentlichen gerade und streifenförmig ausgebildet sein kann, wobei die Schrauben in dem Magazin mit vorzugsweise C-förmigem Querschnitt, ggf. mit inneren Längsstegen, quer zur Erstreckung des Magazins ausgerichtet und längs des Magazins verschiebbar angeordnet sind, kann nicht nur einfach in den Motor-Schraubenzieher eingesetzt, sondern nach seiner Entleerung bzw. nach Herausschieben der Schrauben auch einfach wieder entnommen werden. Es kann dann entweder durch ein neues Magazin ersetzt oder ggf. auch wieder nachgefüllt werden. In jedem Fall wird das Magazin nicht zerstört, und es entstehen keine unkontrollierbaren, die Verschraubung störenden Abfälle. Die Magazinaufnahme kann im wesentlichen parallel zur Achse des Schraubwerkzeuges angeordnet sein, und daran kann eine Schraubenführung mit einer Umlenkung für die quer zu ihrer Transportrichtung geführten Schrauben angeordnet sein. Die Magazinaufnahme stört so am wenigsten und kann für ein Magazin mit relativ großer Schraubenzahl vorgesehen sein. Erst kurz vor Erreichen ihrer Schraubstellung werden die Schrauben durch die Umlenkung um 90° schwenkend lageverändert. Die vorzugsweise durch den federbelasteten Schieber aus dem Magazin geschobenen Schrauben laufen in einer ähnlich ausgebildeten Führung bis zum Erreichen der Schraubstellung. Vorteilhaft kann das Magazin gegenüber dem Schraubwerkzeug axial verschiebbar sein, wobei von dieser Verschiebebewegung der Antrieb betätigt wird.

Damit das Magazin außerhalb des Motor-Schraubenziehers gehandhabt und ggf. auch in halb aufgebrauchtem Zustand entnommen werden kann, ist es vorteilhaft, wenn das Schrauben-Magazin eine ggf. federnde Verriegelung an wenigstens einem seiner Enden aufweist, die von einer die Schrauben längs des Magazines transportierenden Federkraft überwindbar ist. Eine andere vorteilhafte Ausführung einer solchen Verriegelung kann von einer Auslöseeinrichtung an dem Motor-Schraubenzieher lösbar sein und dazu vorzugsweise in eine Ausnehmung des Magazines eingreifen. Diese Auslöseeinrichtung könnte beispielsweise aus einem Vorsprung bestehen, der eine zur Verriegelung vorgesehene federnde Klinke an dem Magazin zurückdrückt, wenn das Magazin in die Magazinaufnahme in der vorbestimmten Position eingelegt wird. Es wäre aber auch denkbar, daß eine Verriegelung bzw. ein Verschluß mittels eines Klebestreifens am Ende des Magazins durch eine in das Magazin eingreifende Schneidklinge gelöst wird.

Die Schrauben können im Schraubenmagazin und in der daran anschließenden Förderbahn an ihrem Kopf, und zwar vorzugsweise an einem von dem Kopf vorstehenden breiten Flansch, in einander gegenüberliegenden Nuten geführt sein, wobei ggf. Schlüsselflächen des Kopfes zur Verdrehsicherung der Schrauben mit Flächen im Magazin zusammenwirken. Die in Längsrichtung möglichst leichtgängige Führung der Schrauben erfolgt über den bundförmigen Flansch zwischen dem Kopf und dem Schraubenschaft, während der eigentliche, die Schlüsselflächen aufweisende Schraubenkopf zu dieser Führung in Längsrichtung des Magazines nicht unmittelbar beiträgt. Dagegen kann diese Führung, die beispielsweise aus einander gegenüberliegenden inneren Stegen des Magazines bestehen kann, so bemessen sein, daß die Schrauben zwischen diesen Stegen in Umfangsrichtung festgelegt sind und somit sichergestellt ist, daß sie stets in einer bestimmten Stellung dem Schraubwerkzeug zugeführt werden. Die Führung an dem Flansch hat auch den Vorteil, daß eine Unterlegscheibe die Aufreihung und Führung im Magazin nicht behindert, da sie zwischen den freien Schenkeln des C-Profiles liegen kann. Es ist jedoch auch möglich, größere Unterlegscheiben in einem gewissen Abstand vom Kopf auf dem Schaft zu führen, wo sie die Arbeitsweise der Schraubenzuführung nicht stören.

Das Schrauben-Magazin kann quer zu seiner Längserstreckung in die zu öffnende Magazinaufnahme einsetzbar sein und dort vorteilhaft durch eine nach Art einer Federraste ausgebildete Haltefeder gesichert sein. Das Magazin kann nach Aufklappen einer Abdeckung einfach von der Seite her wie ein Ladestreifen in die in Längsrichtung des Gerätes liegende Magazinaufnahme eingesetzt werden. Es ist dabei möglich, selbsttätige Verriegelungen vorzusehen, die es verhindern, den Antrieb oder die Schraubenzuführung im aufgeklappten Zustand der Magazinaufnahme zu betätigen.

Eine besonders vorteilhafte Weiterbildung des Erfindungsgegenstandes besteht darin, daß die mit einem Kunststoffkopf versehene Schraube an wenigstens einer ihrer äußeren bzw. inneren Schlüsselflächen einen über diese vorstehenden, verformbaren Vorsprung aufweist, der vorzugsweise als parallel zur Achsrichtung der Schraube verlaufende, vorteilhaft im wesentlichen mittig auf der Schlüsselfläche angebrachte Rippe ausgebildet ist, die dem Schraubenkopf gegenüber dem Schraubwerkzeug ein Übermaß gibt und deren Größe so bemessen ist, daß sie beim Eingriff mit dem Schraubwerkzeug eine Klemmwirkung erzeugt. Die Kunststoffrippe wird beim Ansetzen des Schraubwerkzeuges, beispielsweise einer Schrauber-Nuß, einfach plattgedrückt, dient zum Toleranzausgleich und klemmt den Schraubenkopf mit vorbestimmter Kraft gegenüber dem Schraubwerkzeug fest. Bei einer Sechskantmutter können beispielsweise an drei der insgesamt sechs Schlüsselflächen längsverlaufende Rippen vorgesehen sein, die so bemessen sind, daß der Abstand zwischen der gegenüberliegenden Schlüsselfläche und ihrem Scheitel mit Sicherheit etwas größer ist als das Schlüsselmaß der Schrauber-Nuß. Dadurch wird auch ein Verkanten der Schraube vermieden, und zusätzlich wird eine gute Sicherung gegen versehentliches Herausfallen der Schraube aus dem Schraubwerkzeug verhindert.

Merkmale von bevorzugten Weiterbildungen der Erfindung gehen auch aus der Beschreibung und den Zeichnungen hervor, wobei diese Merkmale und die Merkmale der Ansprüche jeweils für sich allein oder zu mehreren in Form von Unterkombinationen bei einer Ausführungsform der Erfindung verwirklicht sein können. Ausführungsbeispiele der Erfindung sind in den Zeichnungen dargestellt und werden im folgenden näher erläutert. Es zeigen:

Fig. 1 eine Seitenansicht nach Art einer Explosionsdarstellung der einzelnen Baugruppen des Motor-Schraubenziehers mit Antriebseinheit,

Fig. 2 eine Seitenansicht einer bei dem dargestellten Ausführungsbeispiel zu verwendenden Schraube,

Fig. 3 eine vergrößerte Draufsicht auf den Schraubenkopf der Schraube nach Fig. 2,

Fig. 4 einen Längsschnitt durch den Motor-Schraubenzieher,

Fig. 5 ein Detail des Motor-Schraubenziehers in einer anderen Arbeitsstellung,

Fig. 6 einen Detailschnitt durch die Magazinaufnahme nach der Linie VI-VI in Fig. 4,

Fig. 7 einen Schnitt nach der Linie VII-VII in Fig. 4,

Fig. 8 eine Darstellung einer Kulisse einer Steuereinrichtung für den Schrauben-Halter,

Fig. 9 eine perspektivische Darstellung eines Schrauben-Magazins und

Fig. 10 einen Detailschnitt durch ein Schraubwerkzeug und eine Schraube.

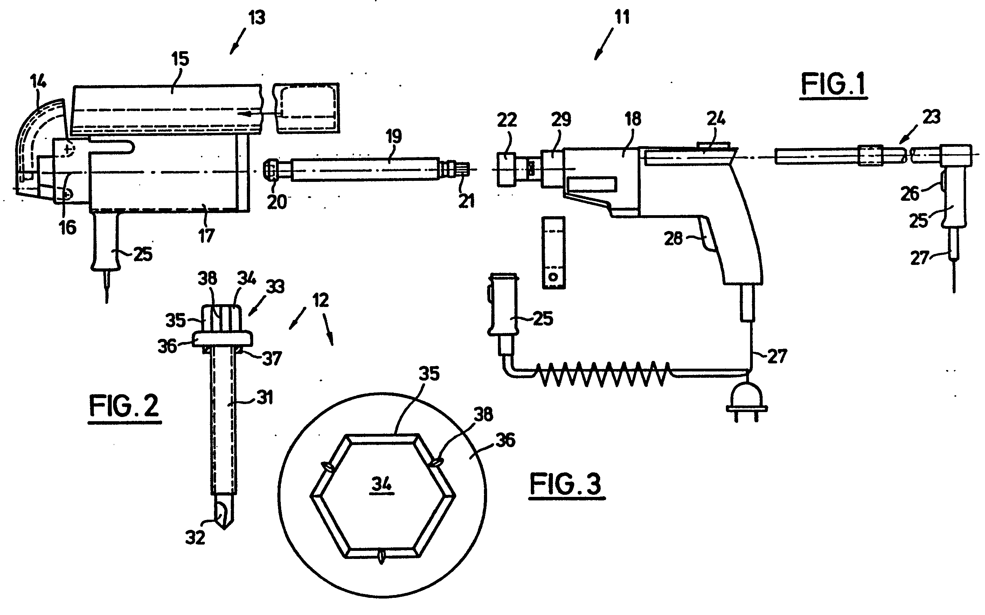

Fig. 1 zeigt einen Motor-Schraubenzieher 11 zum Ein- und Ausdrehen von insbesondere selbstschneidenden Schrauben 12 gemäß den Figuren 2 und 3, der aus verschiedenen zusammensetzbaren Baugruppen besteht.

Eine Baugruppe ist eine Geräteeinheit 13, die eine Schrauben-Förderbahn 14 mit einer Magazinaufnahme 15 für ein Schrauben-Magazin 73 enthält und mit einer Schrauben-Zuführeinheit 16 in Form eines Vorder- oder Außengehäuses verbunden ist. Diese Zuführeinheit 16 ist gegenüber einer einen Gehäuseteil bildenden Schraubeinheit 17 verschiebbar, die mit einem üblichen Handbohrmaschinen-Anschluß, z. B. dem sog. Euro-Anschluß, an einer Antriebseinheit 18 anbringbar ist. Dieser Anschluß kann für eine spezielle Schrauber-Handmaschine oder eine übliche Handbohrmaschine mit entsprechender Antriebsuntersetzung, Rechts- und Linkslauf sowie ggf. Drehmomentbegrenzung vorgesehen sein.

Ein Schraubwerkzeug 20, beispielsweise eine Steckschlüsselnuß mit Innensechskant, ist in noch zu beschreibender Weise an einer als Antriebswelle vorgesehenen Spindel 19 angebracht, die mittels einer üblichen Kupplung 21 an der Abtriebswelle 22 der Antriebseinheit 18 anzubringen ist. Hier können ggf. noch Überlast-Rutschkupplungen bzw. mechanische Drehmoment-Begrenzungskupplungen zwischengeschaltet werden.

An der Antriebseinheit 18 kann ein Stockgriff 23 angebracht werden, der mit seinem vorderen Ende in entsprechende Aufnahmen 24 der Antriebseinheit gesteckt werden kann und an seinem freien Ende ggf. gegabelt ist und zwei Handgriffe enthält, von denen ein als Faustgriff 25 vorgesehener Handgriff mit einem elektrischen Schalter 26 versehen ist, der in ein Kabel 27 eingeschaltet ist, das entweder das Netzanschlußkabel der Antriebsmaschine oder ein besonderes Schaltkabel ist. Der Schalter 26 ist mit dem Haupt-Schalter 28 der Antriebseinheit 18 wirkungsmäßig in "Oder"-Schaltung gelegt, so daß über den Schalter 26 die Antriebseinheit 18 in Betrieb gesetzt werden kann. Dies kann entweder dadurch geschehen, daß eine echte Parallelschaltung vorliegt oder bei elektrischer Reihenschaltung der Haupt-Schalter 28 z. B. mechanisch blockiert werden kann, so daß dann trotz elektrischer Reihenschaltung die Wirkung einer "Oder"-Schaltung entsteht.

Der Faustgriff 25 ist über eine lösbare Verbindung, beispielsweise eine Schwalbenschwanzverbindung, mit dem Stockgriff 23 verbunden und kann auch an anderen Stellen des Schraubenziehers 11 angesetzt werden, beispielsweise, wie dargestellt, an der Schraubeinheit 17 der Geräteeinheit 13 oder an der Antriebseinheit 18, z. B. über einen auf deren Anschlußhals 29 geklemmten Adapter, der dort angebracht wird, wenn die Antriebsmaschine ohne die Geräteeinheit 13 verwendet wird.

Es ist also zu erkennen, daß der Schraubenzieher 11 aus einzelnen Baugruppen besteht, die sehr vielseitig verwendet werden können. Durch Austausch einzelner Geräteteile, beispielsweise der die Schraubenzufuhr bildenden Förderbahn 14, der Magazinaufnahme 15, des Schraubwerkzeugs 20 etc. kann der Schraubenzieher den unterschiedlichsten Anforderungen, beispielsweise anderen Schraubenformen oder Betriebsbedingungen, angepaßt werden.

In den Figuren 2 und 3 ist eine selbstschneidende Schraube 12 dargestellt, die bevorzugt mit dem Motor-Schraubenzieher 11 eingeschraubt werden kann. Die Schraube 12 hat einen mit Gewinde versehenen Schaft 31 und eine etwa entsprechend dem Kerndurchmesser des Gewindes bemessene Bohrspitze 32. Der Schaft 31 und die Bohrspitze 32 bestehen aus härtbarem Stahl, und zumindest die Spitze ist gehärtet. Die Schraube 12 hat einen Schraubenkopf 33, der mit Kunststoff umspritzt ist. Er setzt sich aus einem ein Eingriffsglied 34 bildenden Sechskantabschnitt mit Schlüsselflächen 35 und einem in Richtung zum Schaft 31 daran anschließenden runden Flansch 36 oder Ringbund zusammen, dessen zum Schaft 31 gewandte Fläche die Anlagefläche des Schraubenkopfes 33 bildet. Im dargestellten Beispiel ist ein Dichtungsring 37 untergelegt.

In Fig. 3 ist die Draufsicht auf den Schraubenkopf 33 dargestellt. Es ist zu erkennen, daß bei drei der insgesamt sechs Schlüsselflächen 35 sich in der Mitte der Schlüsselfläche ein vorstehender, über die Höhe des Schraubenkopfes 33 reichender Vorsprung 38 in Form einer Rippe mit dreieckigem Querschnitt befindet. Der Vorsprung 38 ist so bemessen, daß er im Zusammenwirken mit dem entsprechenden, den Sechskant-Abschnitt aufnehmenden Schraubwerkzeug 20 verformen kann, d.h. die Spitze der Rippe wird verformt oder weggedrängt, wenn der Schraubenkopf 33 in das Schraubwerkzeug 20 eingeführt wird. Dadurch wird einerseits ein Toleranzausgleich geschaffen, der für ein besonders gutes Anliegen der Schlüsselflächen 35 an dem Schraubwerkzeug 20 sorgt, und andererseits wird der Schraubenkopf 33 im Schraubwerkzeug 20 so festgehalten, daß er nicht zum Kippen unter seitlicher Belastung neigt, so daß die Schraube 12 nicht zum seitlichen Ausbrechen neigt. Außerdem wird die Schraube 12 im Schraubwerkzeug 20 gehalten und kann nicht herausfallen. Im dargestellten Beispiel ist gezeigt, daß jeweils eine mit einem Vorsprung 38 versehene Schlüsselfläche 35 einer ohne Rippe gegenüberliegt. Dies ist besonders vorteilhaft, weil dann eine Schlüsselfläche 35 besonders gut angepreßt wird.

Es ist jedoch auch eine andere Anordnung möglich, beispielsweise das Vorsehen eines Vorsprunges 38 an jeder Schlüsselfläche 35 oder beispielsweise nur an einer. Statt der Rippen können auch andere Arten von Vorsprüngen 38 verwendet werden, beispielsweise warzenartige Vorsprünge, die auch nicht zwingend in der Mitte einer Schlüsselfläche 35 liegen müssen. Bei einer anderen Form des Schraubenkopfes 33, beispielsweise bei Innensechskantschrauben, können Vorsprünge in vergleichbarer Art verwendet werden. Bedingung für die Bemessung ist, daß die Vorsprünge 38 oder Rippen so hoch sind, daß sie den Toleranzspielraum zwischen den Abmessungen des Schraubwerkzeuges 20 und des Schraubenkopfes 33 überbrücken und gegenüber diesem ein gewisses Übermaß haben und daß sie so bemessen und geformt sind, daß sich das aufgrund der Toleranz ergebende jeweilige Übermaß verdrängen oder verformen läßt. Das ist bei einer Rippe beispielsweise in seitlicher Richtung möglich und bei einem einzelnen Vorsprung auch in axialer Richtung der Schraube 12. Dementsprechend hängt die Bemessung auch von der Art und Härte des Kunststoffes des Schraubenkopfes 33 ab. Bei Innensechskantschrauben müßte zwischen den Vorsprüngen ein Untermaß gegenüber dem Außen-Schlüsselmaß des Schraubwerkzeuges vorliegen.

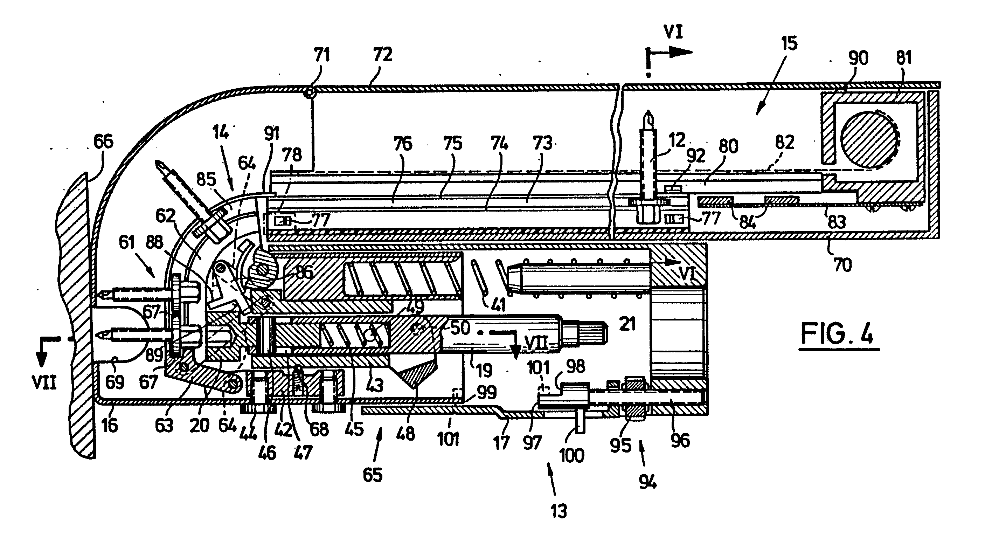

In den Figuren 4 bis 8 ist die Geräteeinheit 13 im einzelnen gezeigt. Die nach Art einer Anschlußkupplung mit einem Anschlußkragen 40 auf dem Anschlußhals 29 der Antriebseinheit 18 befestigbare Schraubeinheit 17 übergreift und führt die ihr gegenüber axial entgegen der Kraft einer Rückstellfeder 41 verschiebbare Schrauben-Zuführeinheit 16, in der ein Führungsstück 42 mit einer mittleren Bohrung angebracht ist, in welcher ein Übertragungsglied 43 in Form einer Führungshülse angeordnet ist. Das Führungsstück 42, das mit dem Übertragungsglied 43 eine Führung bildet, ist über Schrauben 44 mit der Zuführeinheit 16 verschraubt, die eine Grobeinstellung dieser beiden Geräteteile zueinander auf eine bestimmte Schraubenlänge ermöglichen.

In der Bohrung des Übertragungsgliedes 43 ist die Spindel 19 drehbar und axial verschiebbar gelagert, an deren in Fig. 4 nach links weisenden vorderen Ende das Schraubwerkzeug 20 in Form einer Sechskant-Steckschlüsselnuß mit einem Schaft in eine Bohrung eingesetzt und entgegen der Kraft einer Feder 45 in die Spindel 19 hinein verschiebbar ist. Durch den Schaft des Schraubwerkzeugs 20 ragt ein Querstift 46 hindurch, der in einem entsprechenden schrägen Langloch 47 der hülsenförmigen Spindel 19 läuft. Wenn das Schraubwerkzeug 20 entgegen der Kraft der Feder 45 in die Spindel 19 hineingedrückt wird, so wird diese Axialverschiebung durch den Querstift 46 und das schräge Langloch 47 in eine Drehbewegung des Schraubwerkzeuges 20 umgesetzt, das dadurch seine Einraststellung auf dem Schraubenkopf 33 selbst findet.

An dem Übertragungsglied 43 ist ein im wesentlichen U-förmiger, bügelartiger Übertragungshebel 48 als Betätigungsglied um Achsstifte 49 schwenkbar angelenkt (s. auch Fig. 7). Auf jeder Seite greift ein als Kulissennocken 50 vorgesehener Führungsbolzen durch zwei zusammenwirkende Kulissen 51, 52, die als Kulissenschlitze ausgebildet sind. Der Kulissenschlitz 51 ist als Innenkulisse jeweils an einer auf jeder Seite des Führungsstückes 42 vorgesehenen Kulissenplatte 53 vorgesehen, während der Kulissenschlitz 52 als Außenkulisse im Mantel des Gehäuses der Schraubeinheit 17 ausgeschnitten ist.

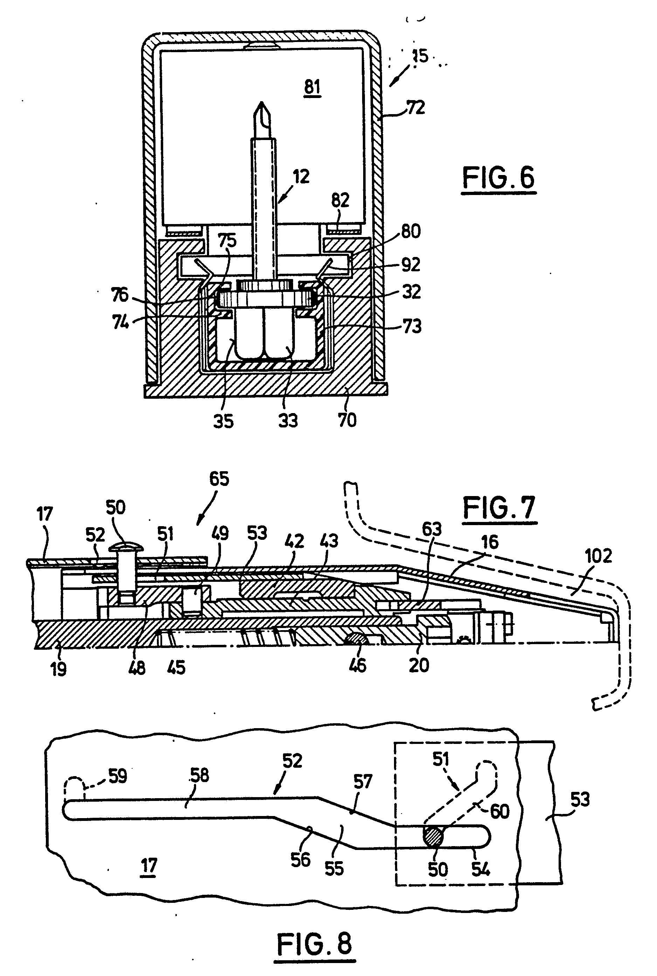

Aus Fig. 8 erkennt man das Zusammenwirken der beiden Kulissen 51, 52. Die Außen-Kulisse 52 hat anschließend an einen Anfangsabschnitt 54 einen schräg ansteigenden Schaltabschnitt 55, dessen beide als Kulissenflächen 56, 57 vorgesehene Begrenzungsflächen weiter voneinander entfernt sind, als dies dem Durchmesser des Kulissennockens 50 entspricht. Daran schließt sich ein langer steigungsloser Kulissenabschnitt 58 an, an dessen Ende ein strichliert angedeuteter, rechtwinklig von ihm abgehender Verriegelungsabschnitt 59 anschließen kann.

Die Innen-Kulisse 51 hat eine flach Z-förmige Gestalt, deren Schaltabschnitt 60 in seiner Schräge dem Schaltabschnitt 55 entgegengesetzt gerichtet ist.

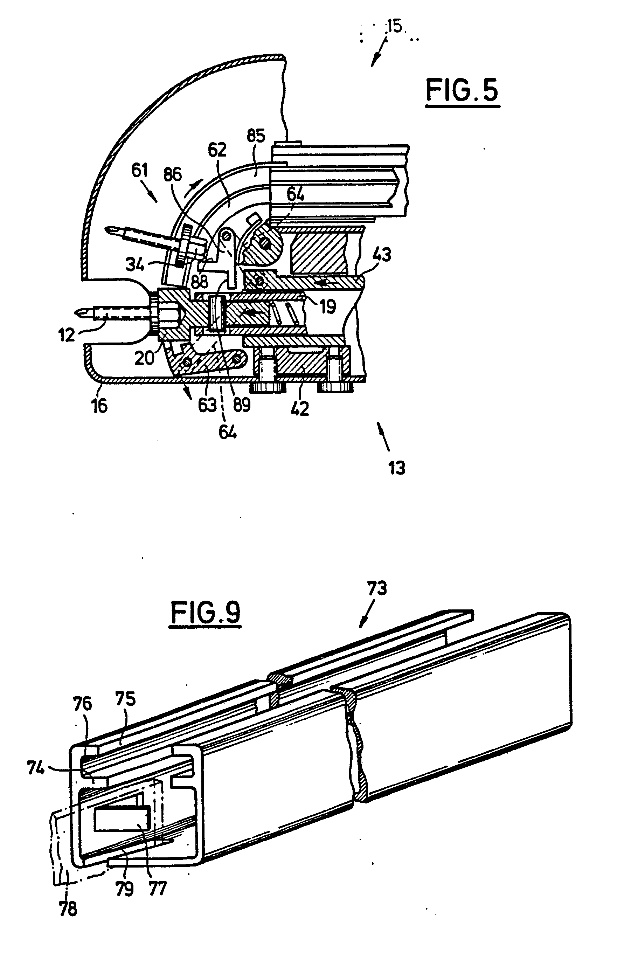

An dem Führungsstück 42 sind zwei zusammen einen Schrauben-Halter 61 bildende Haltebacken 62, 63 schwenkbar angelenkt, die zur Schrauben-Förderbahn 14 gehören. Sie sind über zwei unter einem Winkel zueinander angeordnete Verbindungsstangen oder -hebel 64 gelenkig mit dem Übertragungsglied 43 verbunden, so daß bei einer Axialverschiebung des Übertragungsgliedes 43 ein Doppel-Kniehebelmechanismus gebildet wird, der die beiden Haltebacken 62, 63 aus ihrer in Fig. 4 dargestellten geschlossenen Position in die in Fig. 5 dargestellte geöffnete Position schwenkt. Die aus dem Verbindungshebel 64, dem Übertragungsglied 43, dem Übertragungshebel 48 mit Kulissennocken 50 und den beiden Kulissen 51, 52 gebildete Steuereinrichtung 65 ist als Antriebsmechanismus für den Schrauben-Halter 61 vorgesehen und arbeitet wie folgt:

Bei einer Verschiebung der Schrauben-Zuführeinheit 16 gegenüber der an der Antriebseinheit 18 festsitzenden Schraubeinheit 17 wird die Schraube 12 mit dem Schraubwerkzeug 20 in Eingriff gebracht, da dieses mit der axial durch die Antriebseinheit 18 geführten Spindel 19 in Verbindung steht und daher relativ zur Zuführeinheit 16 nach links bewegt wird. Die Verschiebung ergibt sich dadurch, daß die vordere Zuführeinheit 16 gegen eine Fläche 66 eines Gegenstandes gedrückt wird, in den eine Schraube 12 eingeschraubt werden soll. Die Schraube 12 wird dabei in später noch erläuterter Weise zugeführt und in entsprechenden Führungsnuten 67 der geschlossenen Haltebacken 62, 63 mit ihrem Flansch 36 gehalten. Die unter Federkraft axial verschiebbare Lagerung des Schraubwerkzeuges 20 in der Spindel 19 ermöglicht eine federnde Anpressung des Schraubwerkzeuges 20 an dem Schraubenkopf 33, und die gleichzeitige Drehung des Schraubwerkzeuges 20 ermöglicht eine sichere Einrastung von Schraubwerkzeug 20 und Schraubenkopf 33.

Während dieser Bewegung laufen die Kulissennocken 50 in den Anfangsabschnitten 54 der Kulisse 52. Wenn sie in den Bereich des Schaltabschnittes 55 kommen, laufen sie jeweils an der Kulissenfläche 56 ansteigend und verschieben sich dementsprechend auch in der Kulisse 51 entlang des Schaltabschnittes 60. Dadurch wird der Übertragungshebel 48 gleichzeitig verschwenkt und axial gegenüber dem Führungsstück 42 so verschoben, daß über die Verbindungshebel 64 die beiden Haltebacken 62, 63 voneinander weggeschwenkt werden und den zwischen ihnen gehaltenen Flansch 36 der Schraube 12 freigeben. Dabei kann eine Federraste 68 vorgesehen sein, die die Endlagen der Haltebacken 62, 63 auch unabhängig von der Kulissensteuerung federnd festlegt, um sie jeweils in einer definierten Stellung zu halten.

Wenn die Schraube 12 von den Haltebacken 62, 63 losgelassen wird, so kann sie unter der Kraft der Feder 45 nach vorn schnellen, bis sie auf die Fläche 66 aufschlägt. Die Einstellung der Frontfläche der Zuführeinheit 16, die einen entsprechenden Ausschnitt 69 für die Schraube 12 hat, ist normalerweise so gewählt, daß dieser Weg der Schraube 12 nur relativ kurz ist. Trotzdem kann das Vorschnellen erwünscht sein, um eine gewisse Ankörnung mit der gehärteten Bohrspitze 32 zu erreichen.

Erst jetzt braucht die Antriebseinheit 18 eingeschaltet zu werden. Unter der von der Bedienungsperson ausgeübten Andruckkraft bohrt sich jetzt die selbst schneidende Schraube 12 in die Fläche 66 ein, wobei die Kulissennocken 50 in den Kulissenabschnitt 58 der Außen-Kulisse 52 laufen. Falls ein Verriegelungsabschnitt 59 vorgesehen ist, kann durch eine entsprechende, von außen vorgenommene Einschwenkung der Kulissennocken 50 in dem Verriegelungsabschnitt 59 der Zuführeinheit 16 in einer zurückgezogenen Stellung verriegelt werden, in der die Haltebacken 62, 63 offen und das Schraubwerkzeug 20 relativ gut zugänglich sind. In dieser Stellung ist es möglich, Schrauben 12 nachzudrehen, durch Rücklauf der Antriebseinheit 18 auszuschrauben oder einzeln von Hand von vorn her eingesetzte Schrauben 12 ohne automatische Zuführung einzuschrauben. Beim Rückhub des Schraubwerkzeuges 20 laufen die Kulissennocken 50 an der Kulissenfläche 57 entlang, die einen größeren Axialabstand von der Kulissenfläche 56 hat, als es dem Durchmesser des Kulissennockens 50 entspricht. Daher findet das Schließen der Haltebacken 62, 63 erst dann statt, wenn das Schraubwerkzeug 20 mit Sicherheit aus ihrem Bereich zurückgezogen ist, so daß es nicht eingeklemmt werden kann.

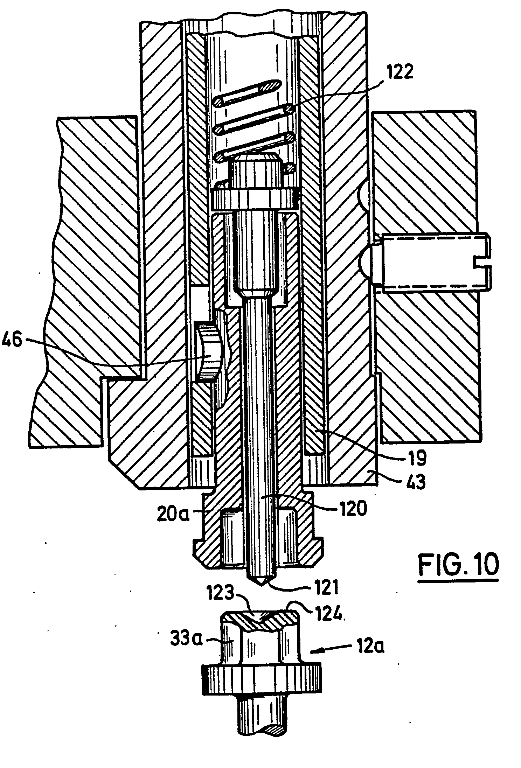

Aus den Figuren 4 und 9 sind die Förderbahn 14 der Schraubenzuführung und die Magazinaufnahme 15 zu erkennen. Die Magazinaufnahme 15 besteht aus einem Aufnahmegehäuse 70, das mit einer über ein Scharnier 71 schenkbar angelenkten Verschlußhaube 72 verschlossen ist. In dem von der Verschlußhaube 72 eingeschlossenen Innenraum ist das Schrauben-Magazin 73 anzuordnen, das aus einer geradlinigen, langgestreckten Profilschiene besteht, deren Querschnittsform als C-förmig bzw. kastenförmig mit einem Längsschlitz an einer seiner langen Seiten beschrieben werden kann. Zwei innere Längsstege 74 ragen parallel zu freien Schenkelabschnitten 75 des C-Profiles in dessen Innenraum aufeinander zu, so daß zwei parallele Nuten 76 gebildet sind, zwischen denen der Flansch 36 der Schraube 12 leicht beweglich geführt ist. Der Abstand der beiden aufeinanderzu ragenden Längsstege 74 voneinander ist so, daß er etwas größer ist als die Schlüsselweite des Schraubenkopfes 33, jedoch kleiner als das zugehörige Diagonalmaß. Dadurch sind die Schrauben 12 zwar in Längsrichtung leichtgängig, jedoch um ihre eigene Achse unverdrehbar geführt.

An beiden Enden des Magazines 73 ist eine Sicherung bzw. Verriegelung 77 gegen unbeabsichtigtes Herausfallen der Schrauben 12 beim Laden des Magazines 73 oder beim Entnehmen des Magazines im halbgefüllten Zustand vorgesehen. Diese Verriegelung 77 besteht aus einer Lasche, die aus dem aus Kunststoff bestehenden Profilmaterial herausgeschnitten und nach innen abgebogen ist. Beim dargestellten Ausführungsbeispiel ist diese Lasche im Bereich einer Seitenfläche des Magazines 73 so angebracht, daß sie mit dem Schraubenkopf 33 zusammenwirkt und, da sie zwar im Bereich des Endes des Magazines 73 angebracht ist, jedoch schräg nach innen weist, das Herausrutschen der Schrauben 12 widerhakenartig sperrt.

In der Magazinaufnahme 15 ist eine in den Figuren 4 und 9 strichpunktiert dargestellte Auslöseeinrichtung 78 in Form eines leistenartigen Vorsprunges vorgesehen, der bei eingesetztem Magazin 73 in dessen Inneres hineinragt und die lappenförmige Verriegelung 77 am Entnahmeende für die Schrauben 12 zurückdrückt. Es ist aber auch möglich, die Verriegelung 77 so schmal auszubilden, daß sie durch die auf die Schrauben 12 wirkende Förderkraft selbst umgelegt wird oder irgendeine andere federnde Sicherung vorzusehen. Damit die Auslöseeinrichtung 78 beim Einführen des Magazines 73 in diese Position gebracht werden kann, hat der Boden des Magazines 73 eine entsprechende Ausnehmung 79. Die die Auslöseeinrichtung 78 bildende Leiste ist dünner als der Abstand zwischen Schraubenkopf 33 und Magazinwand, so daß sie beim Austritt der Schrauben 12 nicht stört.

In der Magazinaufnahme 15, die parallel zur Wellenachse des Motor-Schraubenziehers 11 verläuft und so angeordnet ist, daß sie auch noch über die Antriebseinheit 18 hinwegragen kann, ist eine Schlittenführung 80 für einen Antriebs-Schlitten 81 angeordnet. Dieser Schlitten 81 besteht aus einem Gehäuse, in dem eine Rollbandfeder 82 aufgenommen ist, die am vorderen, gemäß Fig. 4 linken Ende der Magazinaufnahme 15 befestigt ist. Derartige übliche Rollbandfedern 82 sind bestrebt, ihren aufgewickelten Zustand einzunehmen und wirken daher als Zugfeder An dem Schlitten 81 sind an einem flexiblen, nach vorn vorstehenden flexiblen Band 83 als Schieber 84 wirkende Klötze oder Leisten vorgesehen, die in das in der Magazinaufnahme 15 angeordnete Magazin 73 eingreifen und sich dabei in den Nuten 76 führen. Die streifenförmigen Schieber 84 drücken also auf den Flansch 36 der im Magazin 73 letzten Schraube 12 und schieben die Schrauben 12 aus dem Magazin 73 heraus in eine Umlenkung 85, die aus zwei kreisbogenförmig gekrümmten Nuten entsprechend den Nuten 76 besteht und an dem die sektorartig ausgebildeten Haltebacken 62 angeordnet sind.

Die im Magazin 73 quer zur Achsrichtung des Motor-Schraubenziehers 11 angeordneten Schrauben 12 werden im Bereich der Umlenkung 85 um 90° umgelenkt und soweit durchgeschoben, bis sie von der Haltebacke 63 gestoppt werden, die ebenfalls Nuten entsprechend den Nuten 76 aufweist; diese Nuten gehen jedoch kreisbogenförmig so ineinander über, daß eine halbkreisförmige Ringnut gebildet ist, die den Flansch 36 aufnimmt und die Schraube 12 während des Aufsetzens des Schraubwerkzeuges 20 genau führt. An dem Band 83 ist noch ein zweiter Schieber 84 der gleichen Art befestigt, der dafür sorgt, daß das flexible Band 83 um die Umlenkung 85 herum geleitet wird, was zusammen mit einer entsprechenden Länge des Bandes 83 dafür sorgt, daß auch die letzte Schraube 12 aus der Schraubenzuführung noch unter Federkraft in ihre Einschraubposition gedrückt werden kann.

An der Haltebacke 62 ist eine Rückhalteeinrichtung bzw. eine Sperre 86 in Form eines Hebels angelenkt, der durch eine Blattfeder 87 im Uhrzeigersinn belastet ist und eine Anschlagfläche 88 sowie eine Betätigungsfläche 89, jeweils in Form vorstehender Nasen, aufweist.

Aus Fig. 4, die die Haltebacken 62, 63 in geschlossener Stellung zeigt, ist zu erkennen, daß die Betätigungsfläche 89 durch das Schraubwerkzeug 20 in seiner zurückgefahrenen Ruhestellung so belastet wird, daß der die Sperre 86 bildende Hebel entgegen dem Uhrzeigersinn und gegen die Blattfeder 87 aus der Bahn der Schrauben 12 geschwenkt ist, so daß die Schrauben 12 auf der Umlenkung 85 in die Einschraubposition geschoben werden.

Wenn jedoch, wie Fig. 5 zeigt, nach dem Öffnen der Haltbacken 62, 63 und dem Vorschub des Schraubwerkzeuges 20 die Betätigungsfläche 89 die Sperre 86 freigibt, so ragt ihre Anschlagfläche 88 in die Schraubenbahn und hält den Schraubenkopf 33 der nächsten Schraube 12 fest, so daß sie anfänglich nicht mehr gegen den Flansch 36 der im Schraubwerkzeug 20 aufgenommenen Schraube 12 drückt und diese verkanten kann und auch im übrigen nicht mit der Schraub-Spindel 19 in Eingriff kommen kann.

An dem Antriebs-Schlitten 81 ist ein Verriegelungsknopf 90 vorgesehen, der zu betätigen ist, um den Schraubenvorschub auszulösen. Das Magazin 73 kann leicht ausgewechselt werden, indem es in die Magazinaufnahme 15 mit seiner Rückseite zum Motor-Schraubenzieher 11 hin und mit von diesem abstehenden Schrauben 12 eingelegt wird, und zwar so, daß es an seiner Vorderseite unter einen Vorsprung 91 der segmentförmigen Haltebacke 62 greift und formschlüssig festgelegt wird. Am hinteren Ende ist eine bügelförmige Haltefeder 92 vorgesehen, die mit einer Federraste über das streifenförmige Magazin 73 greift. Wenn kein Magazin 73 eingesetzt ist, federt diese streifenförmige Haltefeder 92 so weit nach innen, daß der Schlitten 81 auf der durch die Schlittenführung 80 gebildeten Bahn nicht nach vorn laufen kann und somit blockiert ist.

Die Länge der Vorschubbewegung der Schrauben-Zuführeinheit 16 gegenüber der Schraubeinheit 17 kann durch eine Einstelleinrichtung 94 eingestellt werden, wodurch eine Begrenzung für die Einschraubtiefe bewirkt wird. Dazu ist an der Schraubeneinheit 17 eine durch eine Rändelmutter 95 verstellbar geführte Schraubspindel 96 vorgesehen, die an ihrem einen Ende zweistufig gegeneinander versetzte Anschlagflächen 97, 98 aufweist, die mit dem als Gegenanschlagfläche 99 vorgesehenen Rand des Gehäuses der Zuführeinheit 16 zur Blockierung zusammenwirken. Die Schraubspindel 96 kann über einen Umstellhebel 100 so verschwenkt werden, daß wahlweise eine der Anschlagflächen 97, 98 wirksam wird. Normalerweise ist die, eine kleinere Einschraubtiefe begrenzende, Anschlagfläche 97 im Eingriff. Wenn jedoch eine außergewöhnliche Einschraubsituation ausnahmsweise ein tieferes Einschrauben erfordert, so braucht nicht die Feineinstellung über die Rändelmutter 95 verändert zu werden, sondern es wird durch den Umstellhebel 100 die Anschlagfläche 98 in Eingriff gebracht, was einige Millimeter mehr Einschraubtiefe ergibt. Ferner kann an dem Gehäuse-Rand bzw. im Bereich der Gegenanschlagfläche 99 und an der Schraubspindel 96 je eine Verriegelung 101 in Form eines Vorsprunges vorgesehen sein, die in einer dritten Stellung des Umstellhebels 100 zusammenwirken und den Schraubenzieher 11 in seiner eingefahrenen Position blockieren, so daß der gleiche Effekt erzielt wird wie durch den Verriegelungsabschnitt 59 der Kulissensteuerung.

Es ist zu erkennen, daß ein Motor-Schraubenzieher 11 geschaffen ist, der eine Schraubverbindung selbst an so unzugänglichen Stellen wie in einer Trapezausnehmung 102 (Fig. 7) einschließlich des Vorbohrens in einem Arbeitsgang bei automatischer Schraubenzuführung herstellen kann. Durch die vorteilhafte Anordnung des Magazines 73 in Längsrichtung können trotz sehr schmalen Profils des Motor-Schraubenziehers 11 relativ viele Schrauben 12 in einem Magazin 73 aufgenommen sein. Falls für gewisse Zwecke die Abmessungen des Schraubenziehers keine so wesentliche Rolle spielen, dafür aber ein größerer Schraubenvorrat vorgesehen sein soll, kann außer einer Verlängerung des Magazines 73 oder einer Hintereinanderanordnung mehrerer Magazine 73 auch eine besondere Aufnahme- und Zuführeinrichtung zum schnellen Magazinwechsel vorgesehen sein. Man könnte beispielsweise eine trommelartige Magazinaufnahme, in der mehrere Magazine 73 weiterschaltbar angeordnet sind, anschließen oder auch eine schieberartige Zuführeinrichtung für nebeneinander angeordnete Magazine 73.

Die erheblichen Vorteile des Gerätes liegen darin, daß alle Funktionen rein weggesteuert erfolgen. Die Betätigungskräfte sind gering. Das Magazin 73 bleibt außerhalb des Einschraubbereiches und wird nicht zerstört. Durch die gute Einstellbarkeit auf die vorliegende Schraubenlänge werden Leerwege bei kurzen Schraubenlängen vermieden. Der Magazinwechsel kann außerordentlich schnell und meist in der Betriebslage des Schraubenziehers 11 vorgenommen werden. Dabei ist es vorteilhaft, daß beim Auswechseln des Magazins 73 noch einige Schrauben 12 in der Schraubenzuführung, insbesondere in der Umlenkung 85, vorhanden sind, so daß der Magazinwechsel nicht zu einem bestimmten Zeitpunkt, sondern u.U. auch schon einige Arbeitstakte vor dem Verbrauch der letzten Schraube 12 vorgenommen werden kann. Die Schrauben 12 sind nicht nur in ihrem Magazin 73, sondern auch auf ihrem weiteren Weg zur Schraubstellung durch Gehäuseteile abgedeckt, so daß sie beim Arbeiten mit dem Schraubenzieher 11 nicht stören. Mit dem Schraubenzieher 11 können durch Auswechseln der Schraubwerkzeuge 20 und/oder der Magazine 73 sowie ggf. von Schraubenführungsteilen unterschiedliche Schrauben 12 verarbeitet werden, z. B. auch Innensechskant- oder Kreuzschlitzschrauben.

Fig. 10 zeigt ein Schraubwerkzeug 20a, das dem in Fig. 4 dargestellten entspricht, dessen Schaft jedoch hohl ausgebildet ist und einen Zentrierstift 120 aufnimmt, der durch eine Feder 122 in die in Fig. 10 dargestellte Lage gedrückt wird. Der Zentrierstift 120 hat ein steil konisches Zentrierende 121, das mit einer entsprechenden Ausnehmung 123 an der Stirnfläche 124 eines Schraubenkopfes 33a zur Zentrierung der Schraube 12a zusammenwirkt. Beim Aufsetzen des Schraubwerkzeuges 20a dringt der Zentrierstift 120 mit dem Zentrierende 121 in die Ausnehmung 123 ein und zentriert die Schraube 12a zum Schraubwerkzeug 20a, wobei es dessen Einführdrehung nicht behindert. Der Zentrierstift 120 wird dann gegen die Federkraft zurückgedrückt, während sich die Schraube 12a in das Schraubwerkzeug 20a einführt.

## Patentansprüche

1. Motor-Schraubenzieher (11) mit einer Schraubeinheit (17) und einer Schrauben-Zuführeinheit (16), die etwa parallel zur Schraubachse in einer Vorschub- und einer Rückholbewegung gegeneinander bewegbar gelagert sind, von denen die Zuführeinheit (16) zur Förderung der Schrauben (12) von einem Schrauben-Magazin (73) über eine Förderbahn (14) zu einem Schrauben-Halter (61) ausgebildet ist, in dem die jeweilige Schraube etwa in der Schraubachse in ihrer Schraubstellung liegt, und von denen der Schraubeinheit (17) ein durch relative Axialbewegung in formschlüssigen Dreheingriff mit einem Eingriffsglied (34) des Schraubenkopfes (33) zu bringendes Schraubwerkzeug (20) zugeordnet ist, das über eine Spindel (19) mit einem Antriebsmotor (18) zu kuppeln ist, dadurch gekennzeichnet, daß das Schraubwerkzeug (20) gegenüber der Spindel (19) axial bewegbar angeordnet und zwischen dem Schraubwerkzeug (20) und der Spindel (19) ein die relative Axialbewegung in eine Einfädeldrehung des Schraubwerkzeuges (20) gegenüber dem Eingriffsglied (34) umsetzender Anstell-Verdrehantrieb (46, 47) vorgesehen ist.

2. Schraubenzieher nach Anspruch 1 oder 2, dadurch gekennzeichnet, daß das Schraubwerkzeug (20) gegenüber der Spindel (19) entgegen der Kraft einer Feder (45) axial verstellbar ist, die vorzugsweise in einer einen Schaft des Schraubwerkzeuges (20) führenden Bohrung der Spindel (19) angeordnet ist.

3. Schraubenzieher nach Anspruch 1 oder 2, dadurch gekennzeichnet, daß das Schraubwerkzeug (20) und die Spindel (19) als Anstell-Verdrehantrieb einen in eine schräge Anstellführung eingreifenden Vorsprung aufweisen, wobei vorzugsweise als Vorsprung im Schaft des Schraubwerkzeuges (20) ein Querstift (46) angeordnet ist, der in ein unter Steigung schräg liegendes Langloch (47) im hülsenförmigen vorderen Ende der Spindel (19) eingreift.

4. Schraubenzieher nach einem der vorhergehenden Ansprüche, dadurch gekennzeichnet, daß das Schraubwerkzeug (20) zum Eingriff in mehrkantförmige Schraubenköpfe (33a) ausgebildet ist und einen axial federbelasteten Zentrierstift (120) für den Eingriff in eine Zentrierausnehmung (123) in der Stirnfläche (124) des Schraubenkopfes (33a) aufweist, wobei der Zentrierstift (120) vorzugsweise ein stumpfwinklig konisches Zentrierende (121) aufweist (Fig. 10).

5. Schraubenzieher nach einem der vorhergehenden Ansprüche, dadurch gekennzeichnet, daß die Zuführeinheit (16) einen Gehäuseteil mit einer vorderen Führung (42, 43) für die Spindel (19) aufweist, der gegenüber der Schraubeinheit (17) gegen die Kraft einer Rückstellfeder (41) axial verschiebbar gelagert ist und vorzugsweise in Axialansicht ein Schmalprofil aufweist.

6. Schraubenzieher nach einem der vorhergehenden Ansprüche, dadurch gekennzeichnet, daß der mechanisch auslösbare Schrauben-Halter (61) schwenkbare Haltebacken (62, 63) für die jeweilige Schraube (12) aufweist, die mit einer insbesondere als Kulissensteuerung ausgebildeten Steuereinrichtung (65) als Funktion der axialen Vorschub- und Rückstellbewegung der Schraubeinheit(17) gegenüber der Zuführeinrichtung (16) zwischen einer Haltestellung und einer Freigabestellung über ein Betätigungsglied (48) bewegbar und vorzugsweise in der Freigabestellung verriegelbar sind.

7. Schraubenzieher nach Anspruch 6, dadurch gekennzeichnet, daß das Betätigungsglied (48) ein schwenkbar an einem Übertragungsglied (43) gelagerter Übertragungshebel (48) ist, daß das Übertragungsglied (43) etwa parallel zur Schraubachse verschiebbar an der Zuführeinrichtung (16) gelagert und insbesondere durch eine die Spindel (19) axial verschiebbar und drehbar lagernde Lagerhülse gebildet ist und daß der Übertragungshebel (48) in Eingriff mit Kulissen (51, 52) steht, die an der Zuführeinrichtung (16) und an der Schraubeinheit (17) vorgesehen sind, wobei die Kulissensteuerung vorzugsweise mindestens zwei zusammenwirkende Kulissenschlitze (51, 52) an der Zuführeinrichtung (16) und an der Schraubeinrichtung (17) aufweist, in die ein Kulissennocken (50) des Betätigungsgliedes (48) eingreift und wobei ferner insbesondere das Übertragungsglied (43) mit den Haltebacken (62, 63) über Verbindungshebel (64) antriebsverbunden ist.

8. Schraubenzieher nach Anspruch 6 oder 7, dadurch gekennzeichnet, daß die Steuereinrichtung (65), vorzugsweise durch axial und/oder in Umfangsrichtung gegeneinander versetzte Kulissenflächen (56, 57), die Freigabebewegung des Schrauben-Halters (61) beim Vorschub in einer anderen axialen Relativstellung zwischen dem Schraubwerkzeug (20) und dem Schrauben-Halter (61) einleitet als dessen Schließbewegung beim Rückhub.

9. Schraubenzieher nach einem der Ansprüche 6 bis 8, dadurch gekennzeichnet, daß die Haltebacken (62, 63) Bestandteil der Zuführeinrichtung (16) sind und insbesondere Führungsnuten (67) zur Aufnahme eines Flansches (36) der Schraube (12) aufweisen, wobei die Haltebacken (62, 63) vorzugsweise etwa in und entgegen Schrauben-Zuführrichtung bewegbar gelagert sind.

10. Schraubenzieher nach einem der vorhergehenden Ansprüche, dadurch gekennzeichnet, daß eine insbesondere mit einer Verriegelung (101) versehene Einstelleinrichtung (94) für die Schraubtiefe zwischen einem axial verschiebbaren Gehäuseteil des Schraubenziehers und der mit Betätigungs-Faustgriffen (25) axial fest verbundenen Schraubeinheit (17) vorgesehen ist, wobei vorzugsweise die Einstelleinrichtung (94) einen über ein Gewinde verstellbaren Anschlag aufweist, der insbesondere mit zwei axial gegeneinander versetzten Anschlagflächen (97, 98) versehen ist, die wahlweise in Eingriff mit einer Gegenanschlagfläche (99) bringbar sind.

11. Schraubenzieher nach einem der vorhergehenden Ansprüche, dadurch gekennzeichnet, daß die Schraubeinheit (17) über eine lösbare Anschlußkupplung (29, 40) mit einer nach Art einer Handbohrmaschine ausgebildeten Antriebseinheit (18) verbindbar ist, wobei vorzugsweise ein an der Antriebseinheit (18) anbringbarer Stockgriff (23) vorgesehen ist, unter dessen in erheblichem Abstand von der Antriebseinheit (18) angeordneten Handgriffen insbesondere ein abkuppelbarer, mit einem elektrischen Schalter (26) versehener Faustgriff (25) vorgesehen ist, der wahlweise an der Antriebseinheit (18) und an der durch die Zuführeinheit (16) und die Schraubeinheit (17) gebildeten Geräteeinheit (13) ankuppelbar ist und vorzugsweise mit einem Schalter (28) der Antriebseinheit (18) in "Oder"-Schaltung geschaltet ist.

12. Schraubenzieher nach einem der vorhergehenden Ansprüche, dadurch gekennzeichnet, daß in einer Magazinaufnahme (15) für das Schrauben-Magazin (73) eine federbelastete Schraubentransporteinrichtung angeordnet ist, die vorzugsweise aus einem eine Rollbandfeder (82) aufnehmenden, längs der Magazinaufnahme verschiebbaren Schlitten (81) besteht, der an seiner Vorderseite einen biegsamen, an den Schrauben (12) angreifenden Schieber (84) aufweist.

13. Schraubenzieher nach einem der vorhergehenden Ansprüche, dadurch gekennzeichnet, daß im Bereich des Schrauben-Halters (61) eine Sperre (86) für die nachfolgenden Schrauben (12) vorgesehen ist, die zumindest während des Einschraubvorganges in die Förderbahn (14) einrückbar ist und vorzugsweise einen an dem Schrauben-Halter (61) angelenkten Hebel aufweist, der mit einer Anschlagfläche (88) für den Schraubenkopf (33) und mit einer Betätigungsfläche (89) versehen ist, die zum Zurückziehen der Anschlagfläche (88) aus der Bahn der Schrauben (12) vom Schraubwerkzeug ( 20) betätigbar ist.

14. Schraubenzieher nach einem der vorhergehenden Ansprüche, dadurch gekennzeichnet, daß einer Magazinaufnahme (15) eine Aufnahme- und Zuführeinrichtung für wenigstens ein weiteres Magazin zugeordnet ist.

15. Schraubenzieher nach einem der vorhergehenden Ansprüche mit einem Schrauben-Magazin, dadurch gekennzeichnet, daß das Schrauben-Magazin (73) im wesentlichen gerade und streifenförmig mit vorzugsweise C-förmigem Querschnitt, ggf. mit inneren Längsstegen (74), ausgebildet ist und daß die Schrauben (12) quer zur Erstreckung des Magazins ausgerichtet und längs des Magazins verschiebbar angeordnet sind.

16. Schraubenzieher nach Anspruch 15, dadurch gekennzeichnet, daß das Schrauben-Magazin (73) eine ggf. federnde Verriegelung (77) an wenigstens einem seiner Enden aufweist, die von einer die Schrauben (12) längs des Magazines (73) transportierenden Federkraft überwindbar oder von einer Auslöseeinrichtung (78) auslösbar ist und dazu vorzugsweise in eine Ausnehmung des Magazines (73) eingreift, wobei insbesondere die Schrauben im Schrauben-Magazin (73) und in der daran anschließenden Förderbahn (14) an ihrem Kopf (33), und zwar vorzugsweise an einem von dem Kopf vorstehenden breiten Flansch (36), in einander gegenüberliegenden Nuten (76) geführt sind, wobei ggf. Schlüsselflächen (35) des Kopfes (33) zur Verdrehsicherung der Schrauben (12) mit Flächen im Magazin (73) zusammenwirken.

17. Schraubenzieher nach Anspruch 15 oder 16, dadurch gekennzeichnet, daß das Schrauben-Magazin quer zu seiner Längserstreckung in die zu öffnende Magazinaufnahme (15) einsetzbar und dort insbesondere durch eine Haltefeder (92) gesichert ist.

18. Schraubenzieher nach einem der vorhergehenden Ansprüche in Verbindung mit einer selbstschneidenden Außen-Mehrkantschraube, dadurch gekennzeichnet, daß die mit einem Kunststoffkopf versehene Schraube (12) an wenigstens einer ihrer äußeren bzw. inneren Schlüsselflächen (35) einen über diese vorstehenden, verformbaren Vorsprung (38) aufweist, der vorzugsweise als parallel zur Achsrichtung der Schraube (12) verlaufende, vorteilhaft im wesentlichen mittig auf der Schlüsselfläche (35) angebrachte Rippe ausgebildet ist und dem Schraubenkopf (33) gegenüber dem Schraubwerkzeug (20) für den klemmenden Eingriff ein Übermaß bzw. bei in den Schraubenkopf eingreifendem Schraubwerkzeug ein Untermaß gibt.

## Claims

1. Motor screwdriver (11) with a screwing unit (17) and a screw supply unit (16), which are mounted so as to be movable relative to one another approximately parallel to the screwing axis in a forward and return movement, whereof the supply unit (16) feeds the screws (12) from a screw magazine (73) via a conveying path (14) to a screw holder (61), in which the screw is in its screwing position roughly in the screwing axis and in which with the screwing unit (17) is associated a screwing tool (20) which, by relative axial movement, can be brought into positive rotary engagement with an engagement element (34) of the screw head (33) and which can be coupled by means of a spindle (19) to a drive motor (18), characterized in that the screwing tool (20) is axially movable with respect to spindle (19) and between the screwing tool (20) and spindle (19) is provided a setting rotary drive (46, 47) changing the relative axial movement into a threading rotation of the screwing tool (20) with respect to the engagement element (34).

2. Screwdriver according to claims 1 or 2, characterized in that the screwing tool (20) is axially adjustable with respect to spindle (19) counter to the tension of a spring (45) and is preferably arranged in a bore of spindle (19) guiding a shank of screwing tool (20).

3. Screwdriver according to claims 1 or 2, characterized in that the screwing tool (20) and spindle (19) has as a setting rotary drive a projection engaging in a sloping setting guide and preferably the projection is constituted by a transverse pin (46) in the shank of screwing tool (20) and which engages in a sloping elongated hole (47) in the sleeve-like, front end of spindle (19).

4. Screwdriver according to one of the preceding claims, characterized in that the screwing tool (20) is constructed for engaging in polygonal screw heads (33a) and has an axially spring-loaded centring pin (120) for engaging in a centring recess (123) in face (124) of screw head (33a), the centring pin (120) preferably having an obtuse-angled, conical centring end (121) (fig. 10).

5. Screwdriver according to one of the preceding claims, characterized in that the supply unit (16) has a casing part with a front guide (42, 43) for spindle (19), which is axially displaceably mounted with respect to screwing unit (17) counter to the tension of a return spring (41) and preferably has a narrow profile in axial view.

6. Screwdriver according to one of the preceding claims, characterized in that the mechanically releasable screw holder (61) has pivotable retaining jaws (62, 63) for the particular screw (12), which is movable with a control device (65) particularly constructed as a mobile link as a function of the axial advance and return movement of the screwing unit (17) with respect to the supply device (16) between a retaining position and a release position by means of an actuating member (48) and can preferably be locked in the release position.

7. Screwdriver according to claim 6, characterized in that the actuating member (48) is a transmission lever (48) mounted pivotably on a transmission member (43), that the transmission member (43) is mounted so as to be displaceable on supply device (16) roughly parallel to the screwing axis and is in particular formed by a bearing sleeve axially displaceably and rotatably mounting spindle (19) and that the transmission lever (48) is in engagement with links (51, 52) provided on supply device (16) and on screwing unit (17), the mobile link preferably having at least two cooperating link slots (51, 52) on supply device (16) and on screwing device (17), in which engages a link cam (50) of the actuating member (48) and in particular the transmission member (43) is drive-connected with the retaining jaws (62, 63) via connecting levers (64).

8. Screwdriver according to claims 6 or 7, characterized in that the control device (65) initiates the release movement of screw holder (61) by preferably axially and/or circumferentially reciprocally displaced link faces (56, 57) during advance in a different axial relative position between screwing tool (20) and screw holder (61) than for the closing movement during the return travel.

9. Screwdriver according to one of the claims 6 to 8, characterized in that the retaining jaws (62, 63) are part of the supply device (16) and in particular have guide slots (67) for receiving a flange (36) of screw (12), the retaining jaws (62, 63) preferably being movably mounted in and counter to the screw supply direction.

10. Screwdriver according to one of the preceding claims, characterized in that an adjusting device (94), particularly provided with a locking means (101) is provided for the screw depth between an axially displaceable casing part of the screwdriver and the screwing unit (17) axially fixed to the actuating fist grip (25), the adjusting device (94) having preferably a stop adjustable by means of a thread, which is in particular provided with two axially reciprocally displaced stop faces (97, 98), which can be engaged with a counter-stop face (99).

11. Screwdriver according to one of the preceding claims, characterized in that the screwing unit (17) can be connected by means of a detachable connecting coupling (29, 40) with a driving unit (18) constructed in the manner of a portable drill and there is preferably a stick grip (23) fittable to the driving unit (18) and among its handles arranged at a considerable distance from the driving unit (18) is in particular provided an uncouplable fist grip (25) having an electric switch (26) and which can be coupled to driving unit (18) and the apparatus unit (13) formed by supply unit (16) and screwing unit (17) and is preferably connected in "OR" circuit manner with a switch (28) of driving unit (18).

12. Screwdriver according to one of the preceding claims, characterized in that a spring-loaded screw transfer device is provided in a magazine receptacle (15) for screw magazine (73) and preferably comprises a carriage (81) movable along the magazine receptacle and receiving a coil spring (82) and which is provided on its front with a flexible slide (84) engaging on screws (12).

13. Screwdriver according to one of the preceding claims, characterized in that in the vicinity of the screw holder (61) is provided a barrier (86) for the following screws (12), which is at least engageable in feed path (14) during the screwing in process and preferably has a lever articulated to screw holder (61) which is provided with a stop face (88) for screw head (33) and with an actuating face (89), which is operable by the screwing tool (20) for retracting the stop face (88) out of the path of screws (12).

14. Screwdriver according to one of the preceding claims, characterized in that with a magazine receptacle (15) is associated a receiving and supply device for at least one further magazine.

15. Screwdriver according to one of the preceding claims with a screw magazine, characterized in that the screw magazine (73) is constructed in an essentially straight and strip-like manner, with a preferably C-shaped cross-section, optionally with inner longitudinal ribs (74) and that the screws (12) are aligned at right angles to the extension of the magazine and are displaceable along the magazine.

16. Screwdriver according to claim 15, characterized in that the screw magazine (73) has an optionally resilient locking means (77) at at least one of its ends, which can be overcome by the spring tension conveying the screws (12) along magazine (73) or can be released by a release mechanism (78) and for this purpose preferably engages in a recess of magazine (73), whereby in particular the screws in screw magazine (73) and in the feed path (14) following onto the same are guided in facing slots by head (33) and preferably a wide flange (36) projecting from the head and optionally key faces (35) of head (33) cooperate with faces in magazine (73) for preventing the turning of screws (12).

17. Screwdriver according to claims 15 or 16, characterized in that the screw magazine is insertable at right angles to its longitudinal extension in the magazine receptacle (15) to be opened and is secured there particularly by a retaining spring (92).

18. Screwdriver according to one of the preceding claims, with a self-tapping outer polygonal screw, characterized in that the screw (12) provided with a plastic head has on at least one of its outer or inner key faces (35) a deformable projection (38) projecting above the same and which is preferably constructed as a rib running parallel to the axial direction of screw (12) and advantageously fitted essentially centrally on key face (35) and with respect to screw head (33) gives the screwing tool (20) for the jamming engagement an oversize or in the case of the screwing tool engaging in the screw head an undersize.

**Revendications**

1. Tournevis (11) motorisé, comportant une unité de vissage (17) et une unité d'amenée de vis (16), qui sont montées de manière à être déplaçables parallèlement l'une a l'autre, approximativement parallèlement à l'axe de la vis, selon un mouvement d'avance et un mouvement de recul et parmi lesquelles l'unité d'amenée (16) est agencée de manière à entraîner les vis (12) depuis un magasin à vis (73), le long d'une trajectoire d'entraînement (14), jusqu'à un support de vis (61), dans lequel la vis correspondante est située approximativement dans sa position de vissage dans l'axe de celui-ci, tandis qu'à l'unité (17) est associé un outil de vissage (20), qui, sous l'effet d'un déplacement axial relatif, vient engrener en rotation par coopération de formes complémentaires, avec un élément de prise (34) de la tête de vis (33), et qui est accouplé par l'intermédiaire d'une broche (19) à un moteur d'entraînement (18), caractérisé en ce que l'outil de vissage (20) est moné de manière à être déplaçable axialement par rapport à la broche (19) et qu'il est prévu, entre l'outil de vissage (20) et la broche (19), un dispositif (46, 47) d'entraînement en rotation pour le vissage, qui convertit le déplacement axial relatif en un mouvement de rotation de l'outil de vissage (20) par rapport à l'élément de prise (34).

2. Tournevis selon la revendication 1 ou 2, caractérisé en ce que l'outil de vissage (20) est déplacé axialement par rapport à la broche (19) à l'encontre de la force d'un ressort (45) disposé de préférence dans un perçage de la broche (19) qui guide l'axe de l'outil de vissage (20).

3. Tournevis selon la revendication 1 ou 2, caractérisé en ce que l'outil de vissage (20) et la broche (19) comportent, pour constituer le dispositif d'entraînement de vissage, un organe saillant s'engageant dans un guide oblique de serrage, auquel cas il est prévu, de préférence, dans l'axe de l'outil de vissage (20) , comme un organe saillant, une broche transversale (46) qui s'engage dans un trou allongé (47) disposé selon une disposition oblique en pente dans l'extrémité avant, formant douille, de la broche (19).

4. Tournevis selon l'une des revendications précédentes, caractérisé en ce que l'outil de vissage (20) est réalisé de manière à s'engager sur des têtes de vis (33a) à plusieurs pans et comporte une broche de centrage (120), qui est chargée axialement par un ressort et est destinée à s'engager dans un évidement de centrage (123) ménagé dans la surface frontale (124) de la tête de vis (33a), la broche de centrage (120) possédant de préférence une extrémité de centrage (121) en forme de cône dont l'angle au sommet est obtus (figure 10).

5. Tournevis selon l'une des revendications précédentes, caractérisé en ce que l'unité d'amenée (16) comporte une partie formant logement munie d'un guide antérieur (42, 43) prévu pour la broche (19) et monté de manière à être déplaçable axialement par rapport à l'unité de vissage (17), à l'encontre de la force d'un ressort de rappel (41), ladite partie possédant de préférence un profil étroit selon une vue axiale.

6. Tournevis selon l'une quelconque des revendications précédentes, caractérisé en ce que le support de vis (61), actionné mécaniquement, comporte des mâchoires de retenue basculantes (62, 63) pour la vis correspondante (12), qui peuvent être déplacées au moyen d'un organe d'actionnement (48) sous la commande d'un dispositif (65) réalisé notamment sous la forme d'un dispositif à coulisses, en fonction du mouvement axial d'avance et de recul de l'unité de vissage (17) par rapport à l'unité d'amenée (16), entre une position de retenue et une position de libération et est de préférence verrouillé dans la position de libération.

7. Tournevis selon la revendication 6, caractérisé en ce que l'organe d'actionnement (48) est constitué par un levier de transmission (48) monté basculant sur un organe (43) monté de manière à être déplaçable approximativement parallèlement à l'axe de vissage sur l'unité d'amenée (16) et formé notamment par un manchon de support qui soutient la broche (19) de manière qu'elle puisse avoir un déplacement axial et un mouvement de rotation, en ce que le levier de transmission (48) est en prise avec des coulisses (51, 52), prévues sur l'unité d'amenée (16) et sur l'unité de vissage (17), auquel cas le dispositif de commande comporte de préférence au moins deux fentes de coulisses (51, 52) coopérant entre elles et ménagées dans l'unité d'amenée (16) et dans l'unité de vissage (17) et dans lesquelles s'engage une came de coulisse (50) de l'organe d'actionnement (48) et en ce que, en outre, l'organe de transmission (43) est relié, selon une liaison motrice, à des mâchoires de retenue (62, 63) par l'intermédiaire de leviers de liaison (64).

8. Tournevis selon la revendication 6 ou 7, caractérisé en ce que le dispositif de commande (65) déclenche, de préférence au moyen de surfaces de coulisse (56, 57) décalées axialement et/ou dans la direction circonférentielle l'une par rapport à l'autre, le mouvement de libération du support de vis (61) lors de l'avance dans une position axiale relative entre l'outil de vissage (20) et le support de vis (61), alors que le mouvement de fermeture se produit lors de la course de retour.

9. Tournevis selon l'une des revendications 6 à 8, caractérisé en ce que les mâchoires de retenue (62, 63) sont des composants de l'unité d'amenée (16) et comportent notamment des rainures de guidage (67) destinées à recevoir une collerette (36) de la vis (12), auquel cas les mâchoires de retenue (62, 63) sont montées de manière à être déplaçables de préférence dans la direction d'amenée des vis et dans la direction opposée.

10. Tournevis selon l'une des revendications précédentes, caractérisé en ce qu'il est prévu un dispositif de réglage (94) de la profondeur de vissage, qui est équipé notamment d'un dispositif de verrouillage (101), entre une partie, déplaçable axialement du carter du tournevis et l'unité de vissage (17) reliée axialement et rigidement à une poignée d'actionnement (25), le dispositif de réglage (94) comportant de préférence une butée déplaçable au moyen d'un filetage et équipée notamment de deux surfaces de butée (97, 98), décalées axialement l'une par rapport à l'autre et aptes à être amenées au choix en prise avec une surface de butée antagoniste (99).

11. Tournevis selon l'une des revendications précédentes, caractérisé en ce que l'unité de vissage (17) est reliée par l'intermédiaire d'un dispositif d'accouplement amovible (29, 40) à une unité d'entraînement (18) réalisée à la manière d'une perceuse manuelle, auquel cas il est prévu de préférence un organe en forme de came (23), monté sur l'unité d'entraînement (18) et au-dessous de laquelle sont prévus des organes de préhension disposés à une distance notable de l'unité d'entraînement (18) et notamment une poignée (25), qui peut être désaccouplée, cette poignée étant munie d'un interrupteur électrique (26), propre à être accouplée au choix à l'unité d'entraînement (18) et à l'ensemble (13) de l'appareil constitué par l'unité d'amenée (16) et l'unité de vissage (17), et branchée de préférence dans un circuit "ou", au moyen d'un interrupteur (28) de l'unité d'entraînement (18).

12. Tournevis selon l'une des revendications précédentes, caractérisé en ce que dans un logement (15) pour le magasin à vis (73) se trouve disposé un dispositif de transport des vis, chargé par un ressort et constitué de préférence par un curseur (81) logeant un ressort en forme de bande enroulée (82), déplaçable le long du logement du magasin et comportant sur sa face avant, un poussoir flexible (84), qui s'accroche à la vis (12).

13. Tournevis selon l'une des revendications précédentes, caractérisé en ce qu'au voisinage du support de vis (61) il est prévu, pour les vis (12) suivantes, un dispositif d'arrêt (86) inséré au moins pendant l'opération de vissage dans la trajectoire d'entraînement (14), ce dispositif comportant de préférence un levier articulé sur le support de vis (61) et équipé d'une surface de butée (88) pour la tête de vis (33) et d'une surface d'actionnement (89), actionnée par l'outil de vissage (20) pour rétracter la surface de butée (88) hors de la trajectoire des vis (12).

14. Tournevis selon l'une des revendications précédentes, caractérisé en ce qu'un dispositif de réception et d'amenée pour au moins un autre magasin est associé à un logement (15) du magasin.

15. Tournevis selon l'une des revendications précédentes comportant un magasin à vis, caractérisé en ce que le magasin à vis (73) est réalisé de manière à posséder la forme d'une bande sensiblement rectiligne possédant une section transversale de préférence en forme de C et possédant éventuellement des branches longitudinales intérieures (74), et en ce que les vis (12) sont alignées transversalement par rapport à l'étendue du magasin de manière à être déplaçables le long de ce dernier.

16. Tournevis selon la revendication 15, caractérisé en ce que le magasin à vis (73) comporte, au moins sur l'une de ses extrémités, un dispositif de verrouillage (77) exerçant éventuellement une action élastique, dont l'action peut être surmontée par la force élastique d'entraînement des vis (12) le long du magasin (73) ou qui peut être libéré par un dispositif de libération (78) et s'engage à cet effet de préférence dans un évidement du magasin (73), auquel cas les vis situées dans le magasin à vis (73) et dans la trajectoire d'entraînement (14), qui se raccorde au magasin, sont guidées au niveau de leur tête (33), et ce de préférence au niveau d'une collerette large (36), en saillie par rapport à la tête, dans des rainures superposées (76), des surfaces pour clé (35) de la tête (33) coopérant éventuellement avec des surfaces situées dans le magasin (73) pour bloquer en rotation les vis (12).

17. Tournevis selon la revendication 15 ou 16, caractérisé en ce que le magasin à vis est inséré transversalement par rapport à son étendue longitudinale dans le logement ouvert (15) du magasin, et y est bloqué, notamment par un ressort de retenue (92).

18. Tournevis selon l'une des revendications précédentes, utilisé en liaison avec une vis autotaraudeuse à plusieurs pans extérieurs, caractérisé en ce que la vis (12) munie d'une tête en matière plastique comporte, au niveau d'au moins l'une de ses surfaces extérieures ou intérieures pour clé (35), un organe saillant déformable (38), qui fait saillie au-delà de sa surface, est réalisé en préférence sous la forme d'une nervure parallèle à la direction axiale de la vis (12) et est disposé avantageusement sensiblement au centre de la surface pour clé (35), de manière à fournir à la tête de vis (33), par rapport à l'outil de vissage (20), une surcote pour un engrènement de cet outil avec blocage ou une cote inférieure à la cote prescrite, dans le cas d'un outil de vissage s'engageant dans la tête de vis.

FIG.1

FIG.2

FIG.3

0 131 851

FIG. 4

## FIG.5

## FIG.9

FIG.6

FIG.7

FIG.8

FIG. 10